# EUROPEAN PATENT APPLICATION

(11) **EP 4 786 041 A1**
(43) Date of publication of application: **05.08.2026**
(21) Application number: 24887956.1
(22) Date of filing: 05.11.2024
(51) Int. Cl.: B01J 19/00, C08F 210/16, C08F 210/06, C08F 210/08, C08F 2/01, B01J 4/00

(54) **PREPARATION DEVICE AND METHOD FOR PROPYLENE TERPOLYMER**

(30) Priority: 06.11.2023 CN 202311463163
(71) Applicant: Tianhua Institute Of Chemical Machinery & Automation Co., Ltd, Lanzhou, Gansu 730060 (CN); Tianhua Institute (Nanjing) Intelligent Manufacturing Co., Ltd, Nanjing, Jiangsu Province 211100 (CN)
(72) Inventor: ZHANG, Wanyao, Lanzhou, Gansu 730060 (CN); LIANG, Julong, Lanzhou, Gansu 730060 (CN); WANG, Hui, Lanzhou, Gansu 730060 (CN); SHEN, Yanshun, Lanzhou, Gansu 730060 (CN); ZHANG, Xiaoyang, Lanzhou, Gansu 730060 (CN); HUANG, Shuai, Lanzhou, Gansu 730060 (CN); WANG, Jiangang, Lanzhou, Gansu 730060 (CN); LIANG, Yuanyue, Lanzhou, Gansu 730060 (CN); WANG, Shijun, Lanzhou, Gansu 730060 (CN); QIN, Yunlong, Lanzhou, Gansu 730060 (CN); LI, Yinghai, Lanzhou, Gansu 730060 (CN)
(74) Representative: Murgitroyd & Company
(86) International application number: PCT/CN2024/130009
(87) International publication number: WO 2025/098344

(57) **Abstract**

The present application pertains to the field of chemical engineering and discloses a preparation device and method for propylene terpolymer. The device includes: a catalyst pre-filming unit, a polymerization unit, a degassing and deactivation unit, a powder drying unit, a recovery unit, a propylene feeding pipe, an ethylene feeding pipe, a butene feeding pipe, a catalyst feeding pipe, and a polypropylene discharging pipe. The device designed in the present application involves flexible and convenient operation, is safe and reliable, has a high degree of automation, has few moving apparatures, has a short device construction period and a compact layout, and can use modular construction, thus greatly reducing the investment costs; the device can produce multiple grades with better product performance, is more suitable for producing high-end polyolefin products and taking the high-end production route, and can achieve a multi-capacity device layout of 50,000 to 480,000 tons/year.

## Description

### Cross-Reference

This application claims priority to Chinese Patent Application No. 202311463163.9, filed with the China National Intellectual Property Administration (CNIPA) on November 6, 2023, entitled "PREPARATION DEVICE AND METHOD FOR PROPYLENE TERPOLYME", the entire contents of which are incorporated herein by reference.

### Technical Field

The present application pertains to the field of chemical engineering, and more specifically relates to a preparation device and method for propylene terpolymer.

### Background Art

Research on polypropylene synthesis processes began in the 1950s. From the earliest solvent polymerization process, also known as the slurry process, to the more advanced solution polymerization process, and subsequently to the current liquid-phase bulk and gas-phase bulk polymerization processes, the original solvent polymerization process is no longer used industrially due to continuous advancements in production processes.

Globally, among advanced polypropylene production processes, LyondellBasell currently produces over 50% of the world's total polypropylene output annually, primarily employing the Spheripol dual-loop gas-phase polymerization process; in addition, the Spherizone polypropylene synthesis process, first developed and commercialized by LyondellBasell, and the Borstar polypropylene synthesis process, developed and commercialized by Borealis, have both been widely adopted.

The Spheripol dual-loop gas-phase polypropylene technology, developed and commercialized by LyondellBasell, is currently the most mature and extensively applied novel polypropylene synthesis process; compared with conventional processes, it delivers superior product quality and higher production capacity. The dual-loop configuration enables control over polypropylene molecular weight and molecular morphology by adjusting pressure during the synthesis process, thereby yielding polypropylene products with enhanced performance. The Spherizone process is the latest-generation polypropylene (PP) production technology developed by LyondellBasell based on the Spheripol process. Its key feature is the replacement of loop reactors with a single multi-zone circulating reactor, operating via gas-phase polymerization. The Borstar polypropylene synthesis process, developed and commercialized by Borealis, builds upon LyondellBasell's polypropylene synthesis technology and integrates a gas-phase fluidized-bed reactor in series with the dual-loop reactor configuration, thereby enabling production of polypropylene with superior performance.

However, existing liquid-phase processes suffer from disadvantages including long process flow paths, high capital investment, large numbers of rotating equipment units, and high energy consumption. In contrast, mainstream gas-phase processes are prone to fouling (chunking), poor operational stability, strong odor generation, and inadequate degassing performance. These shortcomings collectively hinder the development of high-end polyolefins.

### Summary of the Invention

### Purpose of the Application

To address the deficiencies of the prior art, the present application aims to provide a preparation device and method for propylene terpolymer. The device features minimal rotating equipment, low energy consumption, scalability for multi-capacity plant layout, simple operation, and improved environmental compatibility.

### Solution

To achieve the above purpose, the present application adopts the following technical solutions. To achieve the foregoing objectives, in a first aspect, the present application provides a preparation device for propylene terpolymer, the preparation device includes:
a catalyst pre-filming unit, a polymerization unit, a degassing and deactivation unit, a powder drying unit, a recovery unit, a propylene feeding pipe, an ethylene feeding pipe, a butene feeding pipe, a catalyst feeding pipe, and a polypropylene discharging pipe, wherein
the catalyst pre-filming unit includes a catalyst stirring tank; the upper portion of the catalyst stirring tank is connected to the propylene feeding pipe and the catalyst feeding pipe, while the bottom portion of the catalyst stirring tank is connected respectively to the top portion of the catalyst stirring tank and the first vertical gas-phase reactor;
the polymerization unit includes a first vertical gas-phase reactor, a first reaction cyclone bag filter, a propylene vaporizer tower, a second horizontal gas-phase reactor, a second reaction cyclone bag filter, and a propylene separation tower;
the first vertical gas-phase reactor, the first reaction cyclone bag filter, and the propylene vaporizer tower are connected in sequence; the top portion of the first vertical gas-phase reactor is connected respectively to the top portion of the second horizontal gas-phase reactor and the bottom portion of the first reaction cyclone bag filter, the top portion of the propylene vaporizer tower is connected respectively to the top portion and the bottom portion of the first vertical gas-phase reactor, and the bottom portion of the propylene vaporizer tower is connected to the lower portion of the first vertical gas-phase reactor;
the second horizontal gas-phase reactor, the second reaction cyclone bag filter, and the propylene separation tower are connected in sequence, and the top portion of the second horizontal gas-phase reactor is connected to the bottom portion of the second reaction cyclone bag filter; the top portion of the propylene separation tower is connected respectively to the top portion and the bottom portion of the second horizontal gas-phase reactor, and the bottom portion of the propylene separation tower is connected to the top portion of the second horizontal gas-phase reactor;
the degassing and deactivation unit includes a low-pressure bag filter, a steam treater, and a monomer compression recovery unit; the top portion of the low-pressure bag filter is connected to the monomer compression recovery unit, the upper portion of the low-pressure bag filter is connected to the second horizontal gas-phase reactor, and the bottom portion of the low-pressure bag filter is connected to the top portion of the steam treater; the monomer compression recovery unit is connected to the propylene vaporizer tower and/or the propylene separation tower;
the powder drying unit includes a dryer, a drying cyclone separator, and a fines bag filter connected in sequence, the top portion of the dryer is connected to the bottom portion of the steam treater, and the bottom portion of the fines bag filter is connected to the polypropylene discharging pipe;
the recovery unit is configured to recover hydrocarbons from gaseous and/or liquid discharges of the respective units;
the propylene feeding pipe is connected to the first vertical gas-phase reactor, the propylene vaporizer tower, and the propylene separation tower;
the ethylene feeding pipe is connected to the propylene vaporizer tower and the propylene separation tower;
the butene feeding pipe is connected to the propylene separation tower.

According to the present application, preferably, the preparation device further includes a powder mixing and conveying unit;
the powder mixing and conveying unit includes an additive feeding unit, and an additive buffer hopper, a mixer, a powder buffer hopper, and a metal detector connected in sequence;
the powder mixing and conveying unit includes at least two sets of the additive feeding units provided in parallel;
the additive feeding unit includes a bag-breaking station and an additive loss-in-weight feeder connected in sequence, and the additive loss-in-weight feeder is connected to the additive buffer hopper;
the dryer is connected to the mixer;
the metal detector is connected to the polypropylene discharging pipe.

In the powder mixing and conveying unit, the material dried by the dryer is mixed with additives, cooled, and then conveyed sequentially through the powder buffer hopper and the metal detector, and finally delivered to the extrusion powder silo via the polypropylene discharging pipe. In the present application, the conventional additive feeding sequence is modified: additives are added, mixed, and cooled prior to pneumatic conveying, thereby reducing the floor height required for the extrusion process, improving the flexibility of powder mixing, enhancing the operational stability of the extruder, and optimizing the conventional configuration.

In the present application, to achieve continuous polymerization, it is preferred that the preparation device includes at least two catalyst pre-filming units provided in parallel; the catalyst pre-filming unit further includes a catalyst drum hoist device, and the bottom portion of the catalyst drum hoist device is connected to the top portion of the catalyst stirring tank. The catalyst drum hoist device is used to hold the pre-mixed and qualified catalyst slurry.

The hexane in the catalyst stirring tank serves as a solvent for formulation and dilution, addressing the pump selection challenge for conveying large-particle catalyst slurry after pre-filming. After catalyst pre-filming, under hexane dilution, the conventional metering pump can be replaced by a high-flow centrifugal pump, such as a canned motor pump, resulting in more stable operation and lower failure and leakage rates.

In the polymerization unit, the first vertical gas-phase reactor may be a vertical gas-phase belt-agitated reactor; the polymerization reaction product is a high-yield homopolymer or atactic copolymer product with a particle size of 1,100-1,700 µm, accounting for 50-70% of the plant capacity; the tail gas from the reaction is discharged through the top portion of the first vertical gas-phase reactor and then enters the first reaction cyclone bag filter; after removal of the active powder, the tail gas proceeds to the propylene vaporizer tower, while the removed active powder is returned to the first vertical gas-phase reactor for continued participation in the reaction.

In the propylene vaporizer tower, propylene or ethylene can be continuously and quantitatively replenished according to the production load; to enable real-time adjustment of product quality, a hydrogen make-up line is preferably provided on the discharging pipe at the top portion of the propylene vaporizer tower. Most of the discharge from the top portion of the propylene vaporizer tower re-enters the first vertical gas-phase reactor to continue participating in the reaction, thereby adjusting monomer composition and ensuring product quality; a portion of the discharge serves as a driving medium to convey the active fine powder accumulated at the bottom portion of the first reaction cyclone bag filter back into the first vertical gas-phase reactor for continued reaction; another portion may be introduced into the filtered gas output from the first reaction cyclone bag as purge gas; preferably, the top portion of the propylene vaporizer tower is connected to the upper portion of the first reaction cyclone bag filter.

According to the present application, a reflux line I is preferably provided at the bottom portion of the propylene vaporizer tower, which is connected respectively to the upper portion of the propylene vaporizer tower and the recovery unit. The provision of the reflux line at the bottom portion of the propylene vaporizer tower enables liquid-phase circulation and liquid drainage, thereby allowing timely adjustment of propylene monomer inventory and inert components, such as prompt removal of propane and heavy hydrocarbons, to prevent reduced reaction activity and elevated system temperature.

The second horizontal gas-phase reactor may be a horizontal agitated reactor; the material from the first vertical gas-phase reactor enters the second horizontal gas-phase reactor, where polymerization proceeds further to yield a copolymer with a rubber content of up to 40-55%. The tail gas from the reaction in the second horizontal gas-phase reactor is discharged through the top portion of the second horizontal gas-phase reactor and then enters the second reaction cyclone bag filter; after removal of the active powder, the tail gas proceeds to the propylene separation tower, while the removed active powder is returned to the second horizontal gas-phase reactor for continued participation in the reaction.

In the propylene separation tower, propylene monomer, ethylene, or butene may be continuously and quantitatively replenished according to the production load; to enable real-time adjustment of product quality, a hydrogen make-up line is preferably provided on the discharging pipe at the top portion of the propylene separation tower. Most of the discharge from the top portion of the propylene separation tower re-enters the second horizontal gas-phase reactor to continue participating in the reaction; a portion of the discharge serves as a driving medium to convey the active powder accumulated at the bottom portion of the second reaction cyclone bag filter back into the second horizontal gas-phase reactor for continued reaction; another portion may be introduced into the filtered gas output from the second reaction cyclone bag as purge gas; preferably, the top portion of the propylene separation tower is connected to the upper portion of the second reaction cyclone bag filter.

According to the present application, a reflux line II is preferably provided at the bottom portion of the propylene separation tower, which is connected respectively to the upper portion of the propylene separation tower and the recovery unit. The provision of the reflux line at the bottom portion of the propylene separation tower not only supplies the reaction monomer to the second horizontal gas-phase reactor, but also enables liquid-phase circulation and liquid drainage, thereby allowing timely adjustment of propylene monomer inventory and inert components, including prompt removal of propane and heavy hydrocarbons, to prevent reduced reaction activity.

In order to prevent cross-contamination of gas components between the two reactors and achieve effective isolation of the gas components, preferably, an air-lock device is further provided between the first vertical gas-phase reactor and the second horizontal gas-phase reactor; when the second gas-phase reactor malfunctions or undergoes maintenance, the second gas-phase reactor can be isolated via the diverter valve to ensure online maintenance without device shutdown. The air-lock device includes conventional equipment, including a high-frequency valve, a receiving tank, a discharge tank, a diverter valve, and an ejector, which enables simultaneous discharge from the first vertical gas-phase reactor and effective air locking, thereby providing a robust guarantee for the production of high-impact products in the second horizontal gas-phase reactor. Preferably, the first vertical gas-phase reactor is connected to the low-pressure bag filter. To regulate reaction composition and product quality, both the first vertical gas-phase reactor and the second horizontal gas-phase reactor are provided with gas vents.

According to the present application, preferably, the degassing and deactivation unit further includes a steam cyclone separator and a steam water scrubber; the top portion of the steam treater is connected to the steam cyclone separator and the steam water scrubber in sequence; the bottom portion of the steam cyclone separator is connected to the upper portion of the steam treater; and the steam water scrubber is connected to the recovery unit.

Material from the second horizontal gas-phase reactor or the first vertical gas-phase reactor enters the steam treater after passing through the low-pressure bag filter; material from the bottom portion of the steam treater is sent to the powder drying unit; tail gas at the top portion of the steam treater enters the steam water scrubber; the separated gas is sent to the recovery unit for further recovery of hydrocarbons therein, thereby reducing specific consumption; the separated liquid is filtered and tested, then discharged to the wastewater system. To improve monomer utilization, hydrocarbons entrained in the low-pressure bag filter are recycled to the polymerization unit via the monomer compression recovery unit. Preferably, the monomer compression recovery unit includes filter I, a cooler, a surge tank, and a tail gas recovery compressor connected in sequence. To prevent bridging at the bottom portion of the low-pressure bag filter and ensure smooth discharge, the low-pressure bag filter is preferably equipped with an air hammer device and an interlock system. Meanwhile, to prevent backflow of steam from the steam treater, which may reduce catalyst activity or cause catalyst kill, a high-efficiency air-lock rotary valve and a gate valve with an air seal device are preferably installed between the low-pressure bag filter and the steam treater.

In the powder drying unit of the present application, selection of the dryer is not particularly limited; any conventional dryer, such as a vertical fluidized bed dryer, a horizontal fluidized bed dryer, a drum dryer, or a drying tower, may be selected based on the capacity of the main plant. In the present application, preferably, the powder drying unit further includes a drying water wash tower, filter II, and a film recovery system connected in sequence; the top portion of the drying cyclone separator is connected to the upper portion of the drying water wash tower; and the film recovery system is connected separately to the recovery unit and the dryer. After material from the bottom portion of the steam treater is thoroughly dried by the dryer, the powder is conveyed to the powder mixing and conveying unit; tail gas is subjected to high-precision dust removal by the drying cyclone separator; the cleaned gas is sent to the drying water wash tower for gas-liquid separation; and the powder recovered from the cleaned tail gas is discharged via the polypropylene discharging pipe. Gas separated in the drying water wash tower is processed by filter II and the film recovery system to separate hydrocarbons and nitrogen; the recovered hydrocarbons are sent to the recovery unit for further hydrocarbon recovery, thereby reducing reaction-specific consumption; the separated nitrogen is returned to the dryer as the drying medium for cyclic reuse.

The recovery unit of the present application is configured to recover hydrocarbons from gas vents, liquid drainages, and cold discharges of various units, thereby reducing specific consumption. Preferably, the recovery unit includes a water wash tower, wherein a propylene recovery line is provided at the top portion of the water wash tower; the middle portion of the water wash tower is connected to at least one of the polymerization unit, the degassing and deactivation unit, and the powder drying unit; and the bottom portion of the water wash tower is connected to a downstream device. After washing with the water wash tower, the gas vent, liquid drainage, and cold discharge from each unit are subjected to filtration and assay, and the resulting wastewater and waste residue are discharged to the wastewater treatment system; the vaporized hydrocarbons are recovered and reused via the battery limit pipe rack.

A second aspect of the present application provides a preparation method for propylene terpolymer, the preparation method is performed in the above preparation device, and the specific steps are as follows:
1) uniformly mixing the catalyst and propylene in the catalyst stirring tank and completing pre-filming treatment, then feeding the mixture into the first vertical gas-phase reactor for polymerization;
2) feeding the polymerization product from the first vertical gas-phase reactor into the second horizontal gas-phase reactor; and feeding the tail gas generated during the reaction, after removal of fines, to the propylene vaporizer tower; the gas vaporized in the propylene vaporizer tower is discharged from the top portion of the tower and, optionally mixed with hydrogen before being returned to the first vertical gas-phase reactor; bottom material of the tower is returned to the first vertical gas-phase reactor;
3) performing further polymerization on the reaction product from the first vertical gas-phase reactor in the second horizontal gas-phase reactor; sending the reaction product to the low-pressure bag filter; feeding the tail gas generated during the reaction, after removal of fines, to the propylene separation tower; the separated gas components are discharged from the top portion of the tower and, optionally mixed with hydrogen before being returned to the second horizontal gas-phase reactor, the bottom material of the tower is returned to the second horizontal gas-phase reactor;
4) feeding the reaction product from the second horizontal gas-phase reactor to the dryer after filtration by the low-pressure bag filter, deactivation treatment in the steam treater;
5) collecting gaseous material dried by the dryer as the final product after dust removal, filtration, and optional addition of additives;
6) recovering hydrocarbons from the gas vents and/or liquid drainages generated in steps 2) to 5). According to the present application, preferably, the catalyst includes a main catalyst, a cocatalyst, an electron donor, hexane, and/or white oil; the main catalyst includes a titanium-magnesium catalyst and/or a metallocene catalyst; the cocatalyst is a trialkylaluminum compound, specifically triethylaluminum and/or tri-n-butylaluminum; the electron donor is at least one selected from dicyclopentyldimethoxysilane, cyclohexylmethyldimethoxysilane, and triethoxysilane.

In a specific embodiment of the present application, the main catalyst, cocatalyst, triethylaluminum, hexane, or white oil are mixed in predetermined proportions in the catalyst stirring tank and then subjected to pre-filming treatment with propylene monomer under heat removal via jacketed chilled water. After pre-polymerization and pre-filming for a predetermined period, the large-particle catalyst undergoes passivation treatment and is then injected into the first vertical gas-phase reactor under flushing with cooled propylene.

In the first vertical gas-phase reactor, the monomer propylene undergoes homopolymerization or random copolymerization at specified operating pressure and temperature, yielding a homopolymer or random copolymer with low fine powder content and large particle size, providing an effective "placeholder" for impact copolymer production in the second gas-phase reactor. The heat generated by the reaction in the first vertical gas-phase reactor is removed partly by latent heat absorption during vaporization of a portion of liquid-phase propylene upon entering the reactor, and partly via heat exchange with the refrigerant medium of the propylene vaporizer tower and the refrigerant medium of the first recycle gas heat exchanger, thereby achieving heat removal and thermal balance. The off-gas generated after the reaction enters the propylene vaporizer tower after removal of fines by the first reaction cyclone bag filter. The propylene vaporizer tower can be continuously and quantitatively supplemented with monomer propylene or ethylene according to the production load, and a gas vent is provided at the top portion of the propylene vaporizer tower. The vaporized gas components in the propylene vaporizer tower are discharged from the top portion of the tower; after addition of hydrogen for adjusting product quality and controlling product melt index, the gas components enter the first recycle gas compressor together, and after heat removal by the refrigerant in the first recycle gas heat exchanger, most of the gas components re-enter the first vertical gas-phase reactor for continued reaction to adjust composition and ensure product quality; a portion serves as the driving medium for the first fines ejector, continuously conveying the active fines discharged from the bottom portion of the first reaction cyclone bag filter into the first vertical gas-phase reactor for continued reaction; a portion serves as the purge gas for the first reaction cyclone bag filter. A liquid-phase circulation and liquid drainage are provided at the bottom portion of the propylene vaporizer tower to timely regulate and remove non-condensable components, such as propane and heavy hydrocarbons, that continuously accumulate in the tower due to the reaction. The reaction product from the first vertical gas-phase reactor enters the second horizontal gas-phase reactor via the air-lock device; the use of the air-lock device achieves effective isolation of gas components, preventing component cross-flow, thereby providing robust assurance for impact copolymer production in the second horizontal gas-phase reactor. In the second horizontal gas-phase reactor, the large-particle feed material from the first vertical gas-phase reactor leads to enhanced production capacity, higher rubber-phase content, and superior product performance during copolymerization in the second horizontal gas-phase reactor. During the reaction in the second horizontal gas-phase reactor, heat is removed partly by vaporization and endothermic cooling upon entry of liquid-phase propylene into the reactor, and partly by heat exchange with the refrigerant medium of the propylene separation tower and the refrigerant medium of the second recycle gas heat exchanger.

The tail gas generated after reaction in the second horizontal gas-phase reactor enters the propylene separation tower after removal of fines by the second reaction cyclone bag filter; the propylene separation tower can be continuously and quantitatively supplemented with monomer propylene, ethylene, or butene according to the production load, and a gas vent is provided at the top portion of the propylene separation tower. The gas components separated in the propylene separation tower are discharged from the top portion of the tower; after addition of hydrogen for adjusting product quality and controlling product melt index, the gas components enter the second recycle gas compressor together, and after heat removal by the refrigerant in the second recycle gas heat exchanger, most of the gas components re-enter the second horizontal gas-phase reactor to continue participating in the reaction, thus adjusting composition and ensuring product quality; a portion serves as the driving medium for the second fines ejector, continuously conveying the active fines discharged from the bottom portion of the second reaction cyclone bag filter into the second horizontal gas-phase reactor for continued reaction; another portion serves as the purge gas for the second reaction cyclone bag filter. A liquid-phase circulation and liquid drainage system is provided at the bottom portion of the propylene separation tower to supply reaction monomer to the second horizontal gas-phase reactor for recirculation, while also enabling timely removal of non-condensable components, such as propane and heavy hydrocarbons, that continuously accumulate in the tower due to the reaction.

The gas vent provided at the tops of the propylene vaporizer tower and the propylene separation tower enables timely adjustment of ethylene, hydrogen, and other components. To control the reaction rate of the reaction system or to an emergency shutdown of the system, the circulating gas system is equipped with an inhibitor or a kill agent; the medium is an O2/N2 mixture, and for safety, the molar concentration of O2 does not exceed 4.5%.

The entrained hydrocarbons in the product streams from the first vertical gas-phase reactor and the second horizontal gas-phase reactor are recovered via a low-pressure bag filter and an off-gas compression recovery unit, then returned to the second horizontal gas-phase reactor for recycle, thereby maintaining constant composition and providing stable compositional conditions for terpolymer production.

After deactivation treatment in the steam treater, the tail gas passes through the steam cyclone separator to further separate fine powder and hydrocarbon gas; the fine powder is returned to the steam treater, while the hydrocarbon gas is sent to the steam water scrubber, where hydrocarbons are separated and routed to the recovery unit; the wastewater and waste residue are filtered, tested, and discharged to the wastewater treatment system.

The wet material from the steam treater is thoroughly dried in the dryer; the tail gas is then subjected to high-precision dust removal in the drying cyclone separator; the removed fines fall into the fines bag filter, and the dedusted gas enters the drying water wash tower to further separate wastewater and waste residue; the gas is subsequently processed by filter II and the film recovery system to separate hydrocarbons and nitrogen; the hydrocarbons are sent to the recovery unit, while the nitrogen is dried, heated, and recycled back to the dryer as the drying medium.

The additive passes through the bag-breaking station, the additive loss-in-weight feeder, and the additive buffer hopper, then mixes with the powder from the bottom portion of the dryer in the mixer; the mixture is cooled and inspected by the metal detector in the powder buffer hopper, and then conveyed together with the powder from the fines bag filter to the extrusion powder silo via nitrogen purge; the copolymerized polypropylene product is thus obtained in the extrusion powder silo. Finally, hydrocarbon-containing gases, liquid drainages, and cold discharges from various units are washed and vaporized in the water wash tower; the resulting wastewater and waste residue are filtered, tested, and discharged to the wastewater treatment system; the vaporized hydrocarbons are recovered via the battery limit pipe rack, thereby reducing specific consumption.

### Advantageous Effects

Compared with the prior art, the advantages of the present application are as follows:
1. The present application can not only produce high-performance terpolymer products but also offers high operational flexibility, enabling multi-capacity plant layout ranging from 50,000 to 480,000 tons/year.
2. The device designed in the present application features flexible and convenient operation, high safety and reliability, high automation level, capability to produce multiple grades with superior product performance, and more suitability for manufacturing high-end polyolefin products, thus aligning with a high-end production strategy.
3. The present application employs a minimal number of rotating equipment units, shortens device construction duration, enables compact layout, and supports modular construction, thus greatly reducing investment costs.
4. Pre-filming treatment of the catalyst is performed in the catalyst pre-filming unit, which suppresses catalyst activity, increases product particle size, and reduces fine powder generation.
5. In the powder mixing and conveying unit, additives are mixed with and cooled prior to pneumatic conveying; this not only reduces the floor height design requirement for the extrusion section and optimizes conventional configuration, but also achieves powder cooling, resulting in lower capital investment and higher energy efficiency.
6. In the powder drying unit, nitrogen purification and hydrocarbon separation are achieved, thereby reducing specific consumption, shortening drying time, and lowering energy consumption.
7. In the recovery unit, cold discharges, gas vents, and liquid drainages are collected, processed, and returned to the battery limit, achieving the lowest specific consumption.
8. In the present application, wastewater and waste residue among the three wastes are integrated and treated in a three-in-one system, thereby improving environmental protection.

Other features and advantages of the present application will be described in detail in the subsequent detailed description section.

### Brief Description of the Drawings

The foregoing and other objects, features, and advantages of the present application will become more apparent from the following detailed description of exemplary embodiments with reference to the accompanying drawings, wherein like reference numerals in the exemplary embodiments of the present application generally denote like components.
FIG. 1 shows a schematic diagram of the preparation device according to one embodiment of the present application.
FIG. 2 shows a schematic diagram of the catalyst pre-filming unit according to one embodiment of the present application.
FIG. 3 shows a schematic diagram of the polymerization unit according to one embodiment of the present application.
FIG. 4 shows a schematic diagram of the degassing and deactivation unit according to one embodiment of the present application.
FIG. 5 shows a schematic diagram of the powder drying unit according to one embodiment of the present application.
FIG. 6 shows a schematic diagram of the powder mixing and conveying unit according to one embodiment of the present application.

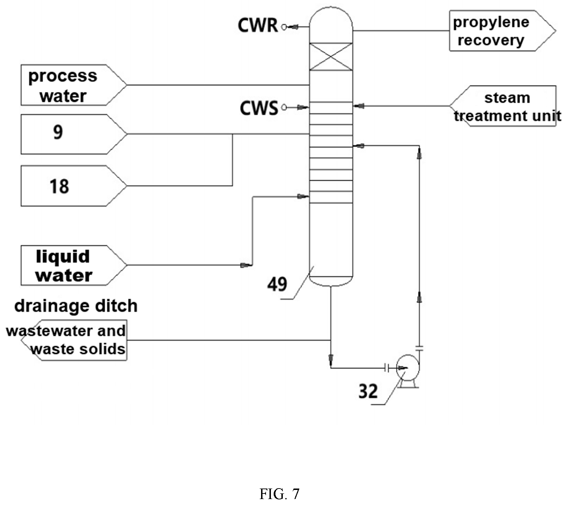

FIG. 7 shows a schematic diagram of the recovery unit according to one embodiment of the present application.

### List of reference numerals:

1. Propylene feed pump; 2. Catalyst drum hoist device; 3. Catalyst slurry tank; 4. Catalyst mixing pump; 5. Propylene refrigeration economizer; 6. First vertical gas-phase reactor; 7. First reaction cyclone bag filter; 8. First fines ejector; 9. Propylene vaporizer tower; 10. First circulation pump; 11. First recycle gas compressor; 12. First recycle gas heat exchanger; 13. air-lock device; 14. Diverter valve; 15. Second horizontal gas-phase reactor; 16. Second reaction cyclone bag filter; 17. Second fines ejector; 18. Propylene separation tower; 19. Second recycle gas compressor; 20. Second recycle gas heat exchanger; 21. Second circulation pump; 22. Low-pressure bag filter; 23. Filter I; 24. Cooler; 25. Surge tank; 26. Off-gas recovery compressor; 27. Discharge valve; 28. steam treater; 29. steam cyclone separator; 30. Fines rotary valve; 31. steam water scrubber; 32. Circulation pump; 33. Vapor-liquid separator; 34. Dryer; 35. Drying cyclone separator; 36. Fines bag filter; 37. Drying water wash tower; 38. Filter II; 39. Film recovery system; 40. Recirculation blower; 41. Recirculating nitrogen heater; 42. Bag-breaking station; 43. Additive loss-in-weight feeder; 44. Additive buffer hopper; 45. Mixer; 46. Powder buffer hopper; 47. Metal detector; 48. ejector; 49. Water wash tower.

### Detailed Description of the Invention

To make the objectives, technical solutions, and advantages of the embodiments of the present application clearer, the technical solutions of the embodiments of the present application will be described hereinbelow in a clear and complete manner. Clearly, the described embodiments constitute only a part of, rather than all of, the embodiments of the present application. Based on the embodiments disclosed herein, all other embodiments obtained by a person skilled in the art without exercising inventive effort fall within the scope of protection of the present application. Unless otherwise expressly stated, throughout the specification and claims, the term "comprise" or variations thereof (e.g., "comprises" or "comprising") shall be construed as meaning inclusion of the stated element or component, without excluding any other element or component. Furthermore, numerous specific details are provided in the following detailed description to facilitate a better understanding of the present application. Those skilled in the art will appreciate that the present application may be practiced without certain of these specific details. In some embodiments, materials, components, methods, and means well known to those skilled in the art are not described in detail so as to highlight the core subject matter of the present application. Hereinafter, preferred embodiments of the present application will be described in greater detail. Although preferred embodiments of the present application are described below, it should be understood that the present application may be embodied in various forms and is not limited to the embodiments set forth herein.

### Example 1

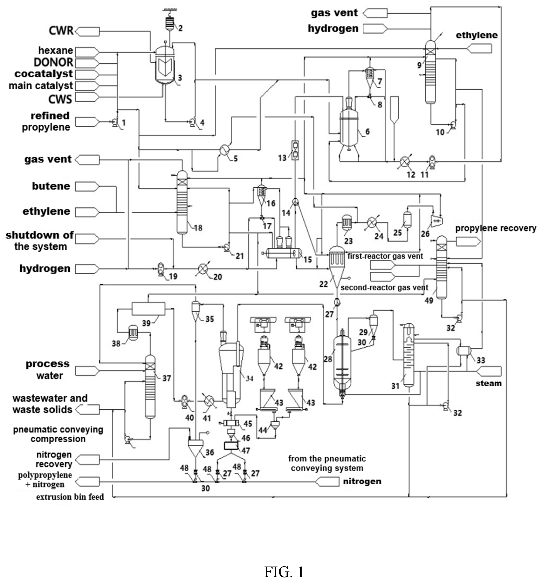

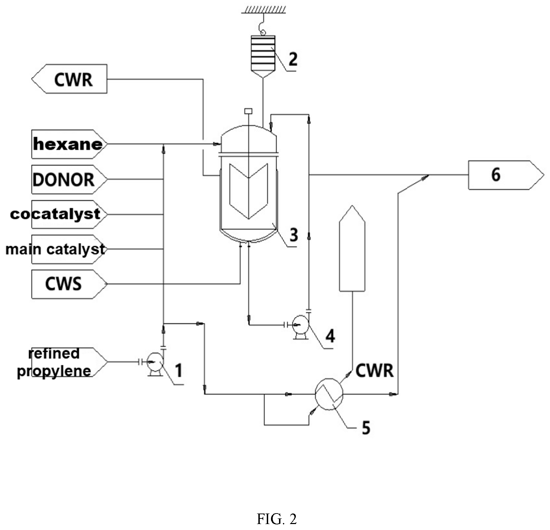

A preparation device for propylene terpolymer, as shown in FIG. 1, including a catalyst pre-filming unit, a polymerization unit, a degassing and deactivation unit, a powder drying unit, a powder mixing and conveying unit, a recovery unit, a propylene feeding pipe, an ethylene feeding pipe, a butene feeding pipe, a catalyst feeding pipe, and a polypropylene discharging pipe, wherein,
the catalyst pre-filming unit, as shown in FIG. 2, includes a catalyst stirring tank 3 and a catalyst drum hoist device 2, wherein the catalyst drum hoist device 2 is connected to the catalyst stirring tank 3 via a hose; the upper portion of the catalyst stirring tank 3 is connected to the propylene feeding pipe and the catalyst feeding pipe, and the bottom portion thereof is connected respectively to the top portion of the catalyst stirring tank 3 and the first vertical gas-phase reactor 6.

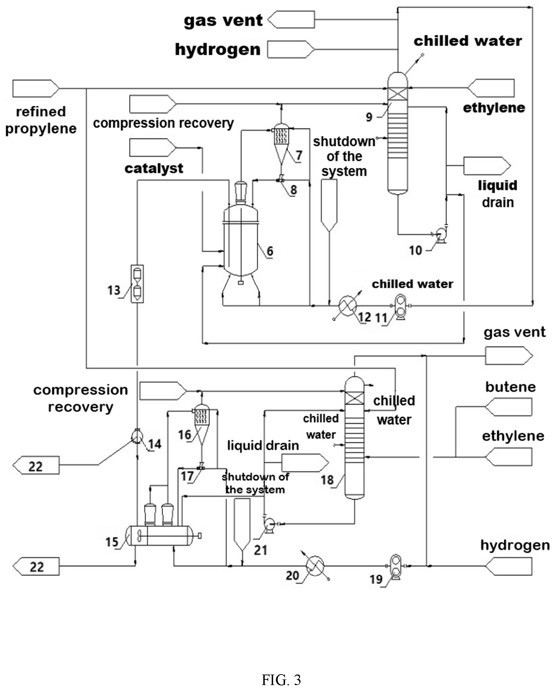

The polymerization unit, as shown in FIG. 3, includes a first vertical gas-phase reactor 6, a first reaction cyclone bag filter 7, a first fines ejector 8, a propylene vaporizer tower 9, a first recycle gas compressor 11, a first recycle gas heat exchanger 12, a second horizontal gas-phase reactor 15, a second reaction cyclone bag filter 16, a second fines ejector 17, a propylene separation tower 18, a second recycle gas compressor 19, and a second recycle gas heat exchanger 20; an air-lock device 13 and a diverter valve 14 are provided between the first vertical gas-phase reactor 6 and the second horizontal gas-phase reactor 15; the diverter valve 14 is connected to the low-pressure bag filter 22. The first vertical gas-phase reactor 6, the first reaction cyclone bag filter 7, and the propylene vaporizer tower 9 are connected in sequence; the top portion of the first vertical gas-phase reactor 6 is connected to the top portion of the second horizontal gas-phase reactor 15; the first fines ejector 8 is connected to the top portion of the first vertical gas-phase reactor 6, the bottom portion of the first reaction cyclone bag filter 7, and the first recycle gas heat exchanger 12; the top portion of the propylene vaporizer tower 9 is connected sequentially to the first recycle gas compressor 11 and the first recycle gas heat exchanger 12; the first recycle gas heat exchanger 12 is connected to the bottom portion of the first vertical gas-phase reactor 6 and the upper portion of the first reaction cyclone bag filter 7; and the bottom portion of the propylene vaporizer tower 9 is connected to the lower portion of the first vertical gas-phase reactor 6; a hydrogen make-up line is provided on the discharging pipe at the top portion of the propylene vaporizer tower 9; a reflux line I is provided at the bottom portion of the propylene vaporizer tower 9, and the reflux line I is connected respectively to the upper portion of the propylene vaporizer tower 9 and the water wash tower 49.

The second horizontal gas-phase reactor 15, the second reaction cyclone bag filter 16, and the propylene separation tower 18 are connected in sequence; the second fines ejector 17 is connected to the bottom portion of the second reaction cyclone bag filter 16, the top portion of the second horizontal gas-phase reactor 15, and the second recycle gas heat exchanger 20; the top portion of the propylene separation tower 18 is connected to the second recycle gas compressor 19 and the second recycle gas heat exchanger 20 in sequence; the second recycle gas heat exchanger 20 is connected to the bottom portion of the second horizontal gas-phase reactor 15 and the upper portion of the second reaction cyclone bag filter 16, respectively; and the bottom portion of the propylene separation tower 18 is connected to the top portion of the second horizontal gas-phase reactor 15. A hydrogen make-up line is provided on the discharging pipe at the top portion of the propylene separation tower 18; a reflux line II is provided at the bottom portion of the propylene separation tower 18, and the reflux line II is connected respectively to the upper portion of the propylene separation tower 18 and the water wash tower 49.

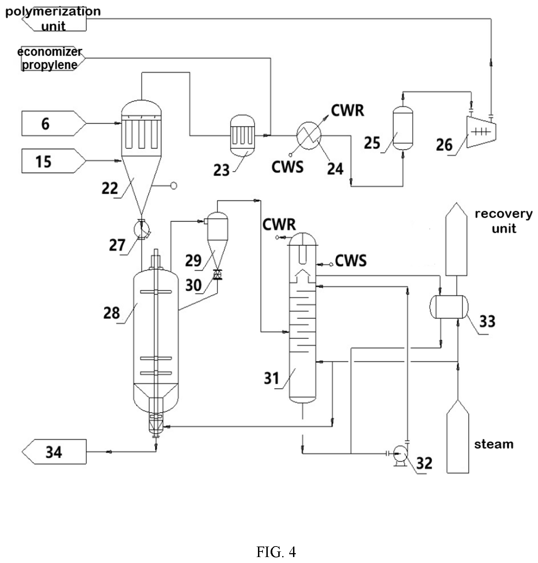

The degassing and deactivation unit, as shown in FIG. 4, includes a low-pressure bag filter 22, a steam treater 28, a monomer compression recovery unit, a steam cyclone separator 29, and a steam water scrubber 31, wherein the monomer compression recovery unit includes a filter I 23, a cooler 24, a surge tank 25, and a tail gas recovery compressor 26 connected in sequence, and the cooler 24 is connected to the propylene feeding pipe. The top portion of the low-pressure bag filter 22 is connected to filter I 23, the upper portion of the low-pressure bag filter 22 is connected to the second horizontal gas-phase reactor 15, and the bottom portion of the low-pressure bag filter 22 is connected to the top portion of the steam treater 28; the tail gas recovery compressor 26 is connected to the propylene vaporizer tower 9 and the propylene separation tower 18; the top portion of the steam treater 28 is connected to the steam cyclone separator 29 and the steam water scrubber 31 in sequence; the bottom portion of the steam cyclone separator 29 is connected to the upper portion of the steam treater 28 via the fines rotary valve 30; the steam water scrubber 31 is connected to the water wash tower 49.

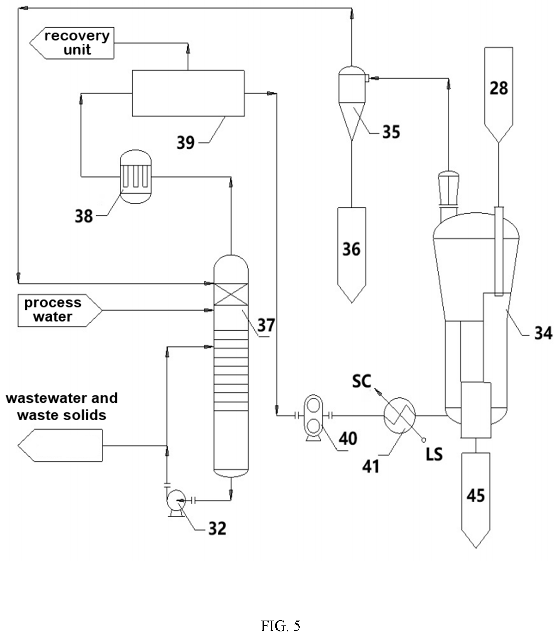

The powder drying unit, as shown in FIG. 5, includes the dryer 34, the drying cyclone separator 35, the fines bag filter 36, the drying water wash tower 37, filter II 38, and the film recovery system 39; wherein the dryer 34, the drying cyclone separator 35, and the fines bag filter 36 are connected in sequence, and the drying water wash tower 37, filter II 38, and the film recovery system 39 are connected in sequence; the top portion of the dryer 34 is connected to the bottom portion of the steam treater 28, and the bottom portion of the fines bag filter 36 is connected to the polypropylene discharging pipe; the top portion of the drying cyclone separator 35 is connected to the upper portion of the drying water wash tower 37, and the film recovery system 39 is connected respectively to the water wash tower 49 and the dryer 34.

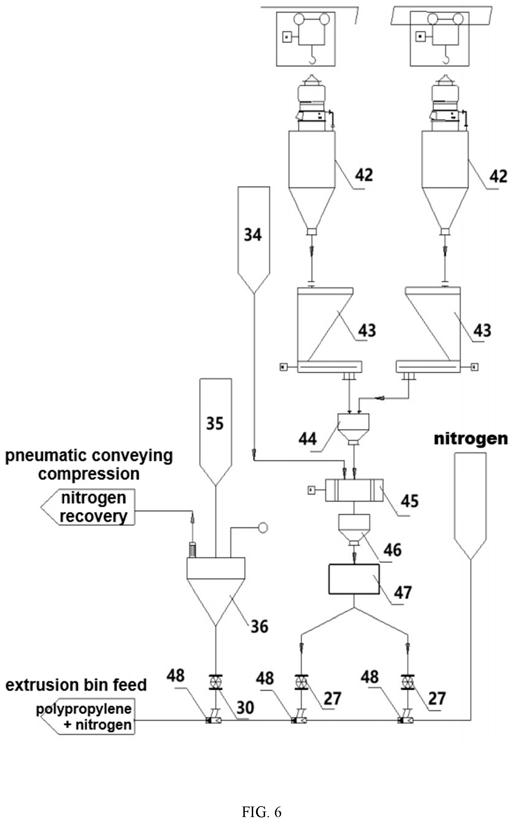

The powder mixing and conveying unit, as shown in FIG. 6, includes the additive feeding unit and the additive buffer hopper 44, the mixer 45, the powder buffer hopper 46, and the metal detector 47, which are connected in sequence; the powder mixing and conveying unit includes two sets of additive feeding units provided in parallel; the additive feeding unit includes the bag-breaking station 42 and the additive loss-in-weight feeder 43, which are connected in sequence; the additive loss-in-weight feeder 43 is connected to the additive buffer hopper 44; the dryer 34 is connected to the mixer 45; the metal detector 47 is connected to the polypropylene discharging pipe.

The recovery unit includes the water wash tower 49; a propylene recovery line is provided at the top portion of the water wash tower 49; the middle portion of the water wash tower 49 is connected to the polymerization unit, the degassing and deactivation unit, and the powder drying unit, respectively; and the bottom portion of the water wash tower 49 is connected to a downstream device. The propylene feeding pipe is connected to the first vertical gas-phase reactor 6, the propylene vaporizer tower 9, and the propylene separation tower 18; the ethylene feeding pipe is connected to the propylene vaporizer tower 9 and the propylene separation tower 18; the butene feeding pipe is connected to the propylene separation tower 18.
propylene terpolymer is produced using the above device, and the specific steps are as follows:
the main catalyst, cocatalyst, triethylaluminum, hexane, or white oil are mixed in a predetermined ratio in the catalyst stirring tank 3, and pre-filming treatment is performed with propylene monomer under heat removal by jacketed chilled water. After pre-polymerization and pre-filming for a predetermined duration, the large-particle catalyst undergoes passivation treatment and is then injected into the first vertical gas-phase reactor 6 under flushing with cooled propylene.

In the first vertical gas-phase reactor 6, propylene monomer undergoes homopolymerization or random copolymerization to produce a homopolymer or random copolymer having low fines content and a large particle size. The off-gas generated after the reaction passes through the first reaction cyclone bag filter 7 to remove fines, and then enters the propylene vaporizer tower 9. The vaporized gas components from the propylene vaporizer tower 9 are discharged from the tower top; hydrogen is added, and the resulting mixture enters the first recycle gas compressor 11; after heat removal by the refrigerant in the first recycle gas heat exchanger 12, most of the stream returns to the first vertical gas-phase reactor 6, while a portion serves as the driving medium for the first fines ejector 8, continuously conveying the reactive fines discharged from the bottom portion of the first reaction cyclone bag filter 7 into the first vertical gas-phase reactor 6. The heat generated by the reaction in the first vertical gas-phase reactor 6 is removed by vaporization heat absorption of part of the liquid-phase propylene after entering the reactor, and partial heat removal and thermal balance are achieved by heat exchange with the cooling medium of the propylene vaporizer tower 9 and the cooling medium of the first recycle gas heat exchanger 12.

The product stream from the first vertical gas-phase reactor 6 passes through the air-lock device 13 and the diverter valve 14 into the second horizontal gas-phase reactor 15 for copolymerization. The tail gas generated after the reaction passes through the second reaction cyclone bag filter 16 to remove fines, then enters the propylene separation tower 18; the gas components separated in the propylene separation tower 18 are discharged from the tower top, mixed with hydrogen, and fed into the second recycle gas compressor 19; after heat removal via the cooling medium of the second recycle gas heat exchanger 20, most of the gas stream is recycled to the second horizontal gas-phase reactor 15, while a portion serves as the motive gas for the second fines ejector 17 to continuously convey active fines into the second horizontal gas-phase reactor 15. During the reaction in the second horizontal gas-phase reactor 15, heat is removed by vaporization heat absorption of part of the liquid-phase propylene entering the reactor, and partial heat removal and thermal balance are achieved by heat exchange with the cooling medium of the propylene separation tower 18 and the cooling medium of the second recycle gas heat exchanger 20.

Hydrocarbons entrained in the product streams from the first vertical gas-phase reactor 6 and the second horizontal gas-phase reactor 15 are recovered via the low-pressure bag filter 22, filter I 23, cooler 24, surge tank 25, and tail gas recovery compressor 26, then returned to the second horizontal gas-phase reactor 15. The powder filtered by the low-pressure bag filter 22 passes through the discharge valve 27 into the steam treater 28.

The tail gas from the steam treater 28, after deactivation treatment, is further separated into fines and hydrocarbon gas by the steam cyclone separator 29; the fines are returned to the steam treater 28, and the hydrocarbon gas separated in the steam water scrubber 31 is sent to the water wash tower 49; wastewater and sludge are discharged to the wastewater treatment system after filtration and detection.

The wet material from the steam treater 28 is completely dried in the dryer 34; the tail gas is then subjected to high-precision dust removal in the drying cyclone separator 35, where the collected fines fall into the fines bag filter 36; the dedusted gas enters the drying water wash tower 37 for further separation of wastewater and sludge; subsequently, hydrocarbons and nitrogen are separated from the gas stream via filter II 38 and the film recovery system 39; the hydrocarbons are sent to the water wash tower 49, while the nitrogen is recirculated via the recirculation blower 40 and the recirculating nitrogen heater 41 back to the dryer 34 as the drying medium for reuse.

Additives pass through the bag-breaking station 42, the additive loss-in-weight feeder 43, and the additive buffer hopper 44, then mix with the powder from the bottom portion of the dryer 34 in the mixer 45; the mixture is cooled and inspected for metal contaminants in the powder buffer hopper 46 and the metal detector 47, respectively, and then conveyed together with the powder from the fines bag filter 36 to the extrusion powder silo by nitrogen gas; the copolymerized polypropylene product is thus obtained in the extrusion powder silo.

Finally, hydrocarbon-containing gases, liquid drainage, and cold discharge emitted from various units undergo water wash and vaporization treatment in the water wash tower 49; the resulting wastewater and sludge are discharged to the wastewater treatment system after filtration and testing; the vaporized hydrocarbons are recovered and reused via the battery limit pipe rack.

The copolymer polypropylene product prepared in this application is a high-end elastomeric impact copolymer, suitable for manufacturing automotive interior components and medical-grade materials. Compared with copolymer polypropylene produced by conventional processes, it exhibits superior properties, including high elasticity, odorlessness, high modulus, and high toughness, thereby solving the low-temperature brittleness of conventional materials, reducing processing difficulty, improving product quality, eliminating strong odor in end-use products, and enhancing overall product competitiveness.

Finally, it should be noted that: the above-mentioned embodiments are merely illustrative of the technical solution of the present application and do not limit the same; while the present application has been described in detail with reference to the foregoing embodiments, those skilled in the art will appreciate that: the technical solutions disclosed in the above-mentioned embodiments can still be modified, or some of the technical features thereof can be replaced by equivalents; however, such modifications or substitutions do not cause the corresponding technical solutions to depart from the spirit and scope of the embodiments of the present application.

### Industrial Applicability

The present application pertains to the field of chemical engineering and discloses a preparation device and method for propylene terpolymer. The device includes: a catalyst pre-filming unit, a polymerization unit, a degassing and deactivation unit, a powder drying unit, a recovery unit, a propylene feeding pipe, an ethylene feeding pipe, a butene feeding pipe, a catalyst feeding pipe, and a polypropylene discharging pipe. The device designed in the present application involves flexible and convenient operation, is safe and reliable, has a high degree of automation, and has few moving apparatures, has a short device construction period and a compact layout, and can use modular construction, thus greatly reducing the investment costs; the device can produce multiple grades with better product performance, is more suitable for producing high-end polyolefin products and taking the high-end production route, and can achieve a multi-capacity device layout of 50,000 to 480,000 tons/year.

## Claims

1. A preparation device for propylene terpolymer, **characterized in that** the preparation device comprises:
a catalyst pre-filming unit, a polymerization unit, a degassing and deactivation unit, a powder drying unit, a recovery unit, a propylene feeding pipe, an ethylene feeding pipe, a butene feeding pipe, a catalyst feeding pipe, and a polypropylene discharging pipe, wherein,
the catalyst pre-filming unit comprises a catalyst stirring tank; the upper portion of the catalyst stirring tank is connected to the propylene feeding pipe and the catalyst feeding pipe, the bottom portion of the catalyst stirring tank is connected respectively to the top portion of the catalyst stirring tank and the first vertical gas-phase reactor;
the polymerization unit comprises a first vertical gas-phase reactor, a first reaction cyclone bag filter, a propylene vaporizer tower, a second horizontal gas-phase reactor, a second reaction cyclone bag filter, and a propylene separation tower;
the first vertical gas-phase reactor, the first reaction cyclone bag filter, and the propylene vaporizer tower are connected in sequence, the top portion of the first vertical gas-phase reactor is connected respectively to the top portion of the second horizontal gas-phase reactor and the bottom portion of the first reaction cyclone bag filter, the top portion of the propylene vaporizer tower is connected respectively to the top portion and the bottom portion of the first vertical gas-phase reactor, and the bottom portion of the propylene vaporizer tower is connected to the lower portion of the first vertical gas-phase reactor;
the second horizontal gas-phase reactor, the second reaction cyclone bag filter, and the propylene separation tower are connected in sequence, and the top portion of the second horizontal gas-phase reactor is connected to the bottom portion of the second reaction cyclone bag filter; the top portion of the propylene separation tower is connected respectively to the top portion and the bottom portion of the second horizontal gas-phase reactor, and the bottom portion of the propylene separation tower is connected to the top portion of the second horizontal gas-phase reactor;
the degassing and deactivation unit comprises a low-pressure bag filter, a steam treater, and a monomer compression recovery unit, the top portion of the low-pressure bag filter is connected to the monomer compression recovery unit, the upper portion of the low-pressure bag filter is connected to the second horizontal gas-phase reactor, and the bottom portion of the low-pressure bag filter is connected to the top portion of the steam treater, the monomer compression recovery unit is connected to the propylene vaporizer tower and/or the propylene separation tower;
the powder drying unit comprises a dryer, a drying cyclone separator, and a fines bag filter connected in sequence, the top portion of the dryer is connected to the bottom portion of the steam treater, and the bottom portion of the fines bag filter is connected to the polypropylene discharging pipe;
the recovery unit is used to recover hydrocarbons from the gaseous and/or liquid discharges of various units, the recovery unit comprises a water wash tower, a propylene recovery line is provided at the top portion of the water wash tower, the middle portion of the water wash tower is connected to at least one of the polymerization unit, the degassing and deactivation unit, and the powder drying unit, and the bottom portion of the water wash tower is connected to downstream device;
the propylene feeding pipe is connected to the first vertical gas-phase reactor, the propylene vaporizer tower, and the propylene separation tower;
the ethylene feeding pipe is connected to the propylene vaporizer tower and the propylene separation tower;
the butene feeding pipe is connected to the propylene separation tower;
the preparation device further comprises a powder mixing and conveying unit;
the powder mixing and conveying unit comprises an additive feeding unit, and an additive buffer hopper, a mixer, a powder buffer hopper, and a metal detector connected in sequence;
the powder mixing and conveying unit comprises at least two sets of the additive feeding units provided in parallel;
the additive feeding unit comprises a bag-breaking station and an additive loss-in-weight feeder connected in sequence, and the additive loss-in-weight feeder is connected to the additive buffer hopper;
the dryer is connected to the mixer;
the metal detector is connected to the polypropylene discharging pipe.

2. The preparation device according to claim 1, **characterized in that** the preparation device comprises at least two catalyst pre-filming units provided in parallel; the catalyst pre-filming unit further comprises a catalyst drum hoist device, the bottom portion of the catalyst drum hoist device is connected to the top portion of the catalyst stirring tank.

3. The preparation device according to claim 1, **characterized in that**
a hydrogen make-up line is provided on the discharging pipe at the top portion of the propylene vaporizer tower; a reflux line I is provided at the bottom portion of the propylene vaporizer tower, and the reflux line I is connected to the upper portion of the propylene vaporizer tower and the recovery unit, respectively;
a hydrogen make-up line is provided on the discharging pipe at the top portion of the propylene separation tower; a reflux line II is provided at the bottom portion of the propylene separation tower, and the reflux line II is connected to the upper portion of the propylene separation tower and the recovery unit, respectively.

4. The preparation device according to claim 1, **characterized in that** the top portion of the propylene vaporizer tower is connected to the upper portion of the first reaction cyclone bag filter, and the top portion of the propylene separation tower is connected to the upper portion of the second reaction cyclone bag filter;
an air-lock device is further provided between the first vertical gas-phase reactor and the second horizontal gas-phase reactor, and the first vertical gas-phase reactor is connected to the low-pressure bag filter.

5. The preparation device according to claim 1, **characterized in that**
the degassing and deactivation unit further comprises a steam cyclone separator and a steam water scrubber; the top portion of the steam treater is connected to the steam cyclone separator and the steam water scrubber in sequence; the bottom portion of the steam cyclone separator is connected to the upper portion of the steam treater; and the steam water scrubber is connected to the recovery unit;
the monomer compression recovery unit comprises a filter I, a cooler, a surge tank, and a tail gas recovery compressor connected in sequence.

6. The preparation device according to claim 1, **characterized in that** the powder drying unit further comprises a drying water wash tower, a filter II, and a film recovery system connected in sequence; the top portion of the drying cyclone separator is connected to the upper portion of the drying water wash tower; and the film recovery system is connected to the recovery unit and the dryer, respectively.

7. A preparation method for propylene terpolymer, **characterized in that** the preparation method is performed in the preparation device according to any one of claims 1 to 6, and the specific steps are as follows:
1) uniformly mixing the catalyst and propylene in the catalyst stirring tank and completing pre-filming treatment, then feeding the mixture into the first vertical gas-phase reactor for polymerization;
2) feeding the polymerization product from the first vertical gas-phase reactor into the second horizontal gas-phase reactor; and feeding the tail gas generated during the reaction, after removal of fines, to the propylene vaporizer tower; the gas vaporized in the propylene vaporizer tower is discharged from the top portion of the tower and, optionally mixed with hydrogen before being returned to the first vertical gas-phase reactor; bottom material of the tower is returned to the first vertical gas-phase reactor;
3) performing further polymerization on the reaction product from the first vertical gas-phase reactor in the second horizontal gas-phase reactor; sending the reaction product to the low-pressure bag filter; feeding the tail gas generated during the reaction, after removal of fines, to the propylene separation tower; the separated gas components are discharged from the top portion of the tower and, optionally mixed with hydrogen before being returned to the second horizontal gas-phase reactor, the bottom material of the tower is returned to the second horizontal gas-phase reactor;
4) feeding the reaction product from the second horizontal gas-phase reactor to the dryer after filtration by the low-pressure bag filter, deactivation treatment in the steam treater;
5) collecting gaseous material dried by the dryer as the final product after dust removal, filtration, and optional addition of additives;
6) recovering hydrocarbons from the gas vents and/or liquid drainages generated in steps 2) to 5).

8. The preparation method according to claim 7, **characterized in that** the catalyst comprises a main catalyst, a cocatalyst, an electron donor, hexane, and/or white oil; the main catalyst comprises a titanium-magnesium catalyst and/or a metallocene catalyst; the cocatalyst is a trialkylaluminum compound, the trialkylaluminum compound is triethylaluminum and/or tri-n-butylaluminum; the electron donor is at least one selected from dicyclopentyldimethoxysilane, cyclohexylmethyldimethoxysilane, and triethoxysilane.
